# NEW EUROPEAN PATENT SPECIFICATION

(11) **EP 1 028 885 B2**
(45) Date of publication and mention of the opposition decision: **22.10.2008**
(45) Mention of the grant of the patent: 03.08.2005
(21) Application number: 98955391.2
(22) Date of filing: 13.11.1998
(51) Int. Cl.: B62D 25/20, B61D 17/10

(54) **A FLOOR FOR A TRANSPORT MEANS AND PROFILES FOR THE CONSTRUCTION THEREOF AS WELL AS A VEHICLE PROVIDED WITH SUCH A FLOOR**
BODEN FÜR TRANSPORTMITTEL UND FLACHPROFILEN FÜR DESSEN ZUSAMMENBAU, UND FAHRZEUG AUSGERÜSTET MIT SO EINEM BODEN
PLANCHER POUR MOYEN DE TRANSPORT, PROFILES POUR SA CONSTRUCTION ET VEHICULE FOURNI AVEC LE PLANCHER

(30) Priority: 13.11.1997 DK 128997
(43) Date of publication of application: 23.08.2000
(73) Proprietor: M.C.M. HOLDING A/S, 6360 Tinglev (DK)
(72) Inventor: M.C.M. HOLDING A/S, 6360 Tinglev (DK)
(74) Representative: Sundien, Thomas
(86) International application number: PCT/DK1998/000494
(87) International publication number: WO 1999/025601

(56) References cited:
- EP-A- 0 685 380
- EP-A1- 0 498 270
- EP-A1- 0 615 894
- EP-A2- 0 619 216
- WO-A-97/17223
- WO-A-98/09860
- WO-A1-96/03290
- DE-A1- 19 520 007
- FR-A- 1 081 087
- JP-A- 59 184 233
- US-A- 3 877 671

## Description

The present invention relates generally to a floor for a means of transport of the type where the floor comprises a plate which is attached to the bottom of a given means of transport, and on which one or more chairs may be secured.

It is common practice that in vehicles for passenger transport, such as e.g. minibuses, a floor is installed within the vehicle body on the bottom of the vehicle body. Such a floor typically comprises a plurality of plate elements separated by two or more rails, which extend longitudinally or transversely, and which are screwed or bolted to the vehicle bottom on which the seats are mounted. The seats in the cabin and the rails are adapted such that the seats may be secured to the rails.

It may be mentioned in this connection that EP-A-0 619 216 discloses a floor plate for minibuses and vans which is coated with an elastic layer of polyurethane, so that the floor is easier to lay, and so that it does not rattle when it is positioned on top of the vehicle bottom.

The plate elements are usually plywood which is covered by a carpet or vinyl covering. The plate elements may be interconnected below the rails or be separated by the rails, so that the rails are disposed in a form of track in the longitudinal direction of the plate. The plate is fixed to the vehicle bottom. The rails are screwed or bolted to the vehicle bottom, which is usually a profiled metal plate.

This provides flexibility in the selection of seating, as the seats may be moved forwards or backwards along the rails and be mounted in the desired arrangement. Particularly in case of larger means of transport, such as buses as well as trains or aircraft, the number of seats may thus also be changed relatively easily by moving the individual seats more or less together on the rails.

The seats may be provided with seat belts in the form of lap belts, so that, without further mounting operations, passengers may sit in a fastened position, no matter which seating is selected.

To increase the safety of passenger transport, it will be a requirement in many countries that also e.g. minibuses must have three-point seat belts on all seats, as is the case with cars.

When the passengers are fastened in three-point belts, the load of the suspension of the seat in the floor is increased significantly in case of a deceleration at an accident or in case of a sudden application of the brakes. This increased impact is caused by the fact that also the torso of the passenger is fastened by the belt, which propagates to the mount of the seat in the rails. This makes additional demands on the attachment of the seat to the rail and consequently the attachment of the rail to the floor/bottom. This is intensified by double or triple seats.

The known types of floors for means of transport, however, cannot meet these demands, and accordingly the invention is intended to provide a floor which can satisfy these additional demands on the seat attachment because of the intensified demands on the use of seat belts. Furthermore, in the known floor systems, the flexibility as to where the seats may be arranged on the floor rails is limited by the position of the rails, and, therefore, the invention is additionally intended to provide a floor which gives greater flexibility with respect to the positioning of seats.

WO-A-96/03290 discloses a framework of longerons and transverse members for attachment to the bottom of means of transport which afford forward and rearward anchorage points for seating. The framework comprises a plurality of recesses distributed in a suitable pattern for receiving securing means for the seats. As an alternative to the framework there may be provided a honeycomb composite panel which provides corresponding anchorage points.

The invention provides a method of mounting chairs according to claim 1 and a means of transport according to claim 4.

A floor plate according to the invention may exhibit a perforated structure. A floor extremely flexible with respect to the arrangement of chairs is achieved hereby, as the attachment points no longer have to be on a linear rail, but may be selected freely. It may be realized by the invention that only some of the recesses are used for the attachment of chairs. Other attachment recesses may be used for the attachment of the floor to the bottom. The recesses which are not used may be covered so that the floor with the mounted chairs will have a uniform surface without long openings like at the rails, which facilitates cleaning of the floor. It may be realized by the invention that the chair-carrying recesses may moreover be used for the attachment of other aids, such as e.g. wheel chairs. There are no standard dimensions for wheel chairs, and therefore it has previously not been possible to guarantee safe attachment of a wheel chair in passenger transport, but the floor according to the invention may enable optimum fixing at all necessary points so that the wheel chair is securely fixed to the floor during transport.

When the chairs are secured in some recesses and the floor is attached to the means of transport in other recesses which are positioned in the vicinity of the chair-carrying recesses, the floor is capable of absorbing some impact energy in case of an accident. A floor according to the invention may be used as part of the passenger safety system of the means of transport. The floor according to the invention will be capable of being deformed, particularly if it is made of a metal plate, preferably an aluminium plate since some weight may be saved hereby. With a floor according to the invention, it will be possible to make a floor for minibuses which satisfies the requirements for "M1" passenger vehicle approval.

The floor thus provides much more flexibility with respect to chair layout in e.g. minibuses. The chairs may be secured more safely to the floor, so that also the floor can absorb impact energy in case of a collision, where a passenger fastened in a seat belt is thrown forwards. It is moreover realized by the invention that the seat belts of the chair may be secured directly to the floor.

In a preferred embodiment of a floor according to the invention, the floor plate is arranged to be mounted in the bottom of the means of transport by means of at least one strap, which, optionally together with a segment of the floor, is fixed below the bottom of the means of transport. This results in a secure and strong attachment which does not take up much space, and which has an extremely low weight. The strap attachment may optionally be supplemented with a rubber strip for silencing the floor, if conditions so permit.

The attachment points for attaching the floor plate to the bottom may be shaped as slots immediately above the longitudinal joints between the profiles. This results in strong fixing, which also ensures that the surface of the floor remains plane.

In the preferred embodiment of a floor according to the invention, the plate is composed of a plurality of at least partly perforated floor profiles, whose longitudinal extent corresponds to the travelling direction of the means of transport, or transversely, if conditions so permit. The profiles are interconnected at their side flanges by welding, gluing or the like, or in that the side flanges are constructed as a tongue and groove connection. Because the floor plate is composed of profiles, a cost-saving and extremely flexible construction of the floor according to the invention is achieved. Further, this construction means that the floor plate may be manufactured with a great strength relative to weight, in particular if the floor profiles, which are preferably made of aluminium, are shaped as U-profiles.

In a further embodiment, heating pipes for floor heating may be arranged inside the profiles between the bottom and the floor. This provides floor heating right below the passengers, which gives a better distribution of heat in the cabin than if merely ribbed pipe heating is installed in the side of the vehicle body. Optionally, an insulation material may be arranged on the underside of the heating pipes, if this is deemed necessary. If the profiles are of aluminium, the profile material, however, will contribute to conveying the heat upwards and into the cabin.

The floor plate may be composed of profiles of different widths, so that the attachment points may be adapted individually to the bottom of various types and makes of the means of transport.

In the preferred embodiment, each recess is shaped as an elongate hole with a reception opening for the securing means. This allows the chair to be mounted and removed easily. The reception opening may either be provided in the centre or at one end of the elongate hole.

The recesses may moreover be provided with mounting blocks where one or more of the mounting blocks are formed with the same recess as in the floor. The flooring is hereby protected against load from the legs of the chairs. The mounting block may be in the form of a band, if conditions so permit. The same floor type/the same perforated profile may hereby be used for several different mounting fittings for the attachment of chairs, auxiliary equipment or other equipment, merely by manufacturing suitable mounting blocks. This results in further constructional flexibility, in terms of production as well as use.

The floor according to the invention may moreover be provided with a flooring, e.g. vinyl or other covering, on an adapted floor plate, which is moreover formed with holes corresponding to the mounting positions for the selected cabin layout. The cover plate is placed on top of the floor plate so that a neat surface of the floor in the cabin is achieved in that the recesses which are not used for the mounting of chairs together with other recesses, such as attachment holes or the like, are covered. Such a plate is relatively simple and inexpensive to manufacture. If another seating is subsequently selected, a new cover plate is laid on the floor.

A profile for the floor plate may exhibit a perforated surface and two side faces thereon, which are produced e.g. by bending. Further, in a first embodiment, the profile is made of aluminium. It is realized in this connection that the profiles may altematively be made of kevlar or a similar fibre material, if so permitted by the price and other conditions. This provides an extremely suitable starting element for the making of a floor according to the preferred embodiment.

The invention will be described more fully below with reference to the accompanying drawing, in which
- fig. 1: shows a floor plate for a minibus which is not according to the invention,
- fig. 2: shows a floor plate composed of profiles according to the preferred embodiment of the invention,
- fig. 3: shows a schematic sectional view of the attachment of the floor plate to a vehicle bottom,
- fig. 4: shows a top view of a section of the floor plate in the attachment,
- fig. 5: shows a sectional view through a floor according to the invention,
- fig. 6: shows a mounting block and a preferred embodiment of the recesses,
- fig. 7: shows a sectional view of the floor with installed heating,
- fig. 8: shows a cross-section in a floor profile for use in the construction of a floor according to the invention,
- fig. 9: shows a cross-section of a fitting piece of the floor profile,
- fig. 10: shows a cross-section of a main profile for use in the mounting of chairs or other aids,
- fig. 11: shows a cross-section of an insert for use in connection with the profile shown in fig. 10,
- fig. 12: shows a cross-section of another embodiment of an insert,
- fig. 13: shows a cross-section of a third embodiment of an insert,
- fig. 14: shows a cross-section of a panel profile, and
- fig. 15: shows the principle in the mounting of a chair.

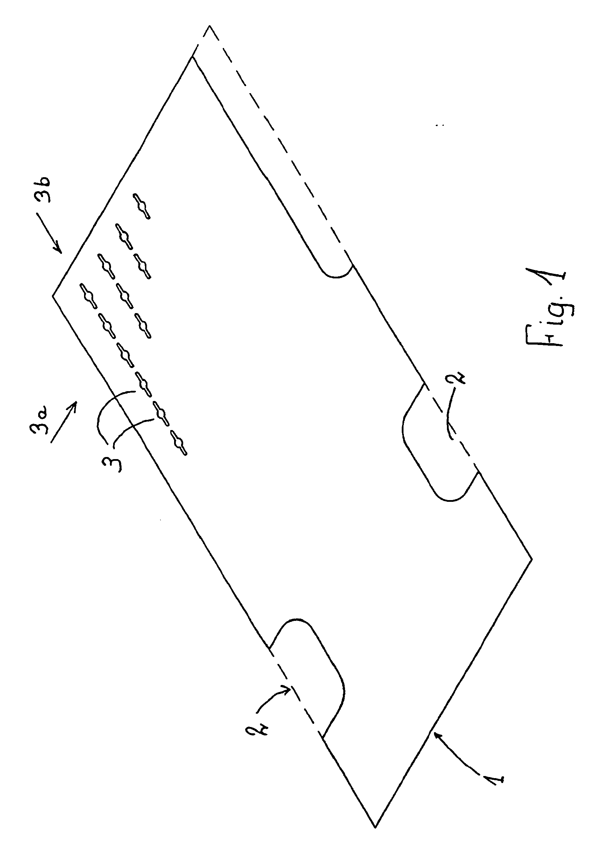

Fig. 1 shows a floor plate 1 for a minibus, which is not according to the invention. It consists of a plate 1 e.g. of aluminium for reasons of weight, which is adapted to the shape of the bottom in the minibus or the van, as is shown by the reference numeral 2 in the drawings. The floor plate 1 is perforated with recesses 3 which are made in lines as shown at 3a and in rows as shown at 3b in fig. 1.

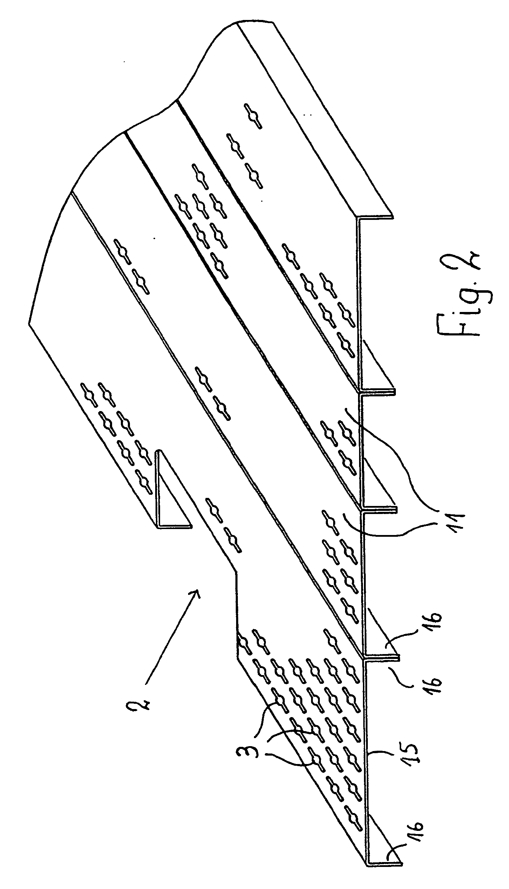

Fig. 2 shows a preferred embodiment of a floor plate for a floor according to the invention, said plate being made by placing a plurality of U-profiles 11 side by side and joining them by welding, gluing (bonding) or the like. The U-profiles 11 are perforated with recesses 3, preferably in the same pattern as indicated in fig. 1. At least the plate part 15 of the U-profiles 11 is provided with the recesses 3. Furthermore, the side flanges 16 in the profiles 11 may also be provided with recesses 3, which can make the production of the profiles easier and less expensive, as they may thus be bent from a perforated plate material.

A preferred material for the profiles 11 is aluminium, since a strong, but simultaneously light floor structure is obtained hereby.

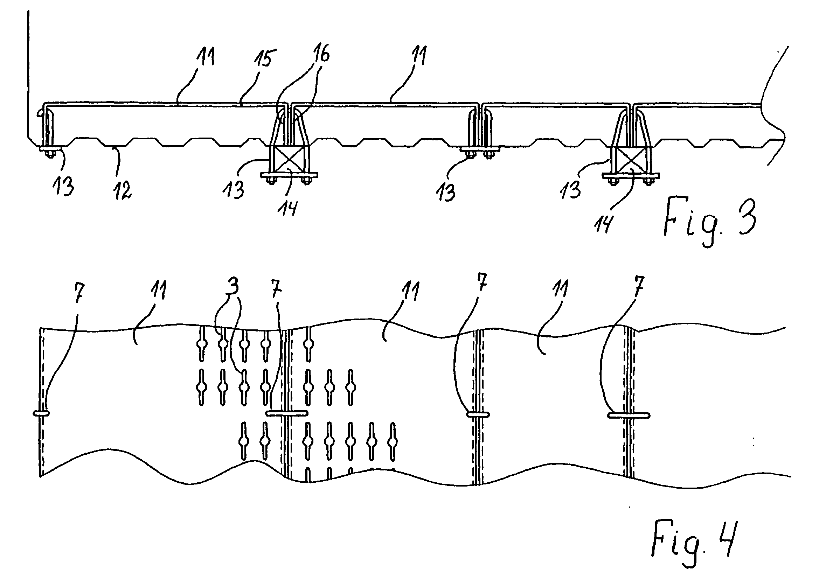

The floor plate, which is thus composed of reversely positioned U-profiles, is attached, as shown in fig. 3, to the bottom of the vehicle 12 by means of straps 13, which are passed through some attachment recesses 7 in the floor plate and down below the bottom 12 of the vehicle, optionally below one of the side members 14. As shown in fig. 3, the straps 13 and the attachment in the bottom 12 may be made in different ways. These recesses 7 are produced by milling of slots 7 at the joint between two profiles 11. The strap 13 at the top will hereby be positioned at the same level as or below the surface of the floor, so that the floor will have a plane appearance. The floor plate consisting of the assembled U-profiles 11 exhibits a plurality of longitudinal, vertical reinforcement flanges in the form of two mutually engaging side flanges 16 from two adjacent profiles. The attachment of the floor plate takes place via one or more of these reinforcement flanges, as shown in fig. 3. It is moreover ensured by this attachment that the fixing force from the strap 13 propagates directly down into the side faces 16 of the profiles 11.

Fig. 4 shows a top view of the attachment, from which it appears clearly that the attachment recesses 7 are cut or produced in another manner in the surface of the floor at the profile joints. As will be seen, the size of the recesses 7 depends on the selected form of the straps. It has moreover been realized that the form of recesses and attachment may be selected freely under the circumstances.

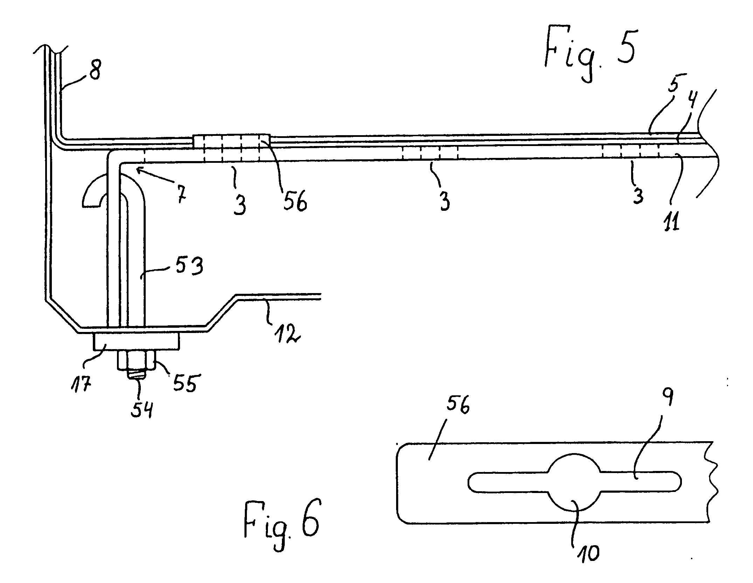

Fig. 5 shows a section through a floor according to the invention. A cover plate 4 is arranged on top of the floor plate 4, said plate being covered by a covering 5 in the form of flooring vinyl, a carpet material or other form of flooring. As will moreover be seen from fig. 5, the recesses 3 not used are covered by the cover plate 4. A mounting block 56, on which a chair or the like may be mounted, is mounted at another of the shown recesses 3. A recess 7 accommodates a hook-shaped attachment 53 which at the top grips the plate in the recess 7, and which at the bottom is secured to the bottom 12 of the vehicle in that the hook 53, which has threads 54 at the bottom, is pulled downwards toward the bottom 12 by tightening of a nut 55, which engages the bottom 12 via a plate member 17 in the form of a washer or the like.

Fig. 6 shows a schematic view of a mounting block 56. It shows a preferred embodiment of the recesses 3 for the attachment of chairs to the floor plate 1. This embodiment of the recess 3 is correspondingly provided in the mounting block 56. The embodiment consists of an elongate hole 9 with a reception opening 10 in the centre through which the screw head or the like may be inserted. Alternatively, the reception opening 10 may be arranged at one end of the elongate hole 9.

The mounting block 56 may be formed as individually arranged blocks or as a band comprising a row of recesses 3, if the selected seating so permits.

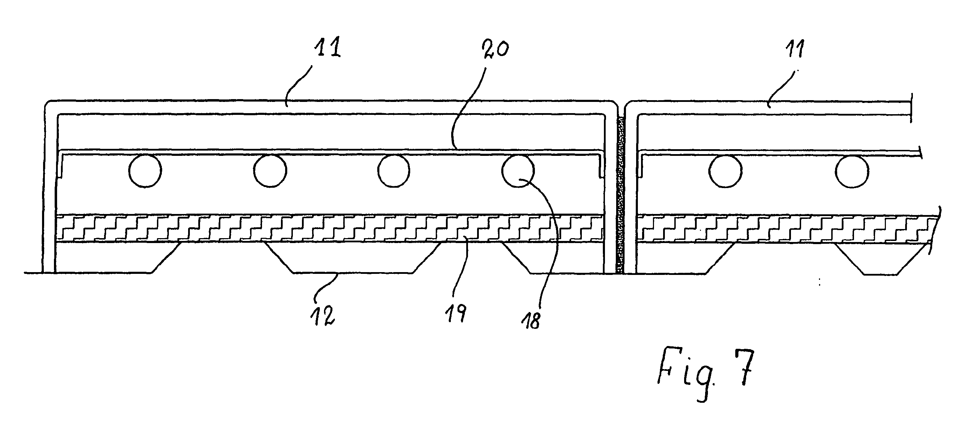

Fig. 7 shows a section through a floor according to the invention which is equipped with heating pipes 18, and an insulation plate 19 is laid on or immediately above the bottom 12. The heating pipes 18 may be secured to a lower plate 20 which is secured inside the profiles. This plate 20 may optionally be made of aluminium like the profiles 11, thereby ensuring a good conduction of heat upwards and into the cabin.

It has moreover been realized in this connection that this plate 20 may be used as a "collection tray" for dirt. Thus the floor may easily be cleaned by means of water or compressed air, which prevents accumulation of too much dirt.

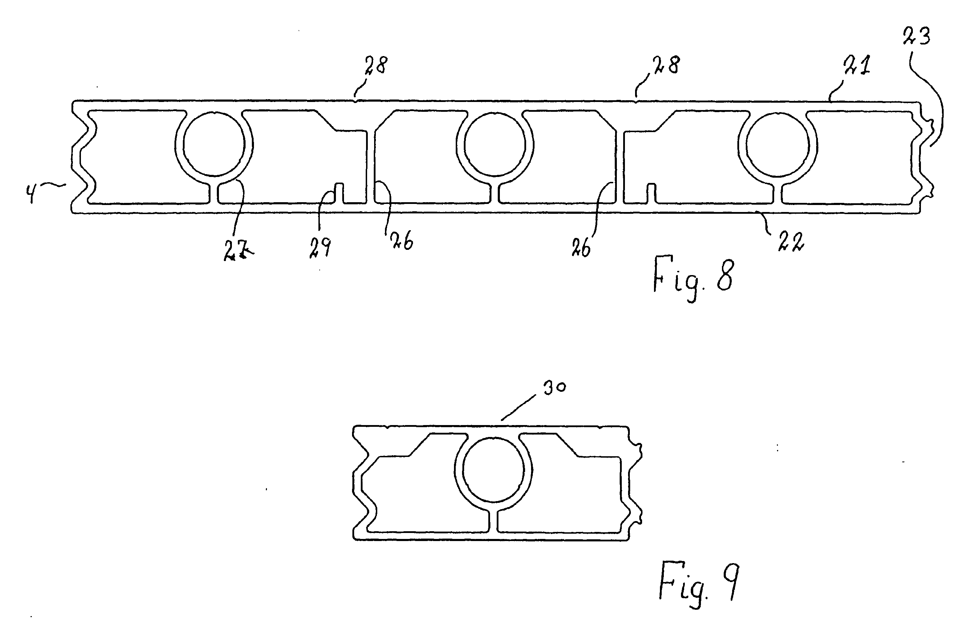

A further development of the floor according to the invention is illustrated in figs. 8-13 of the drawing in the form of a modular system consisting of profiles of extruded aluminium. The floor profile shown in fig. 8 is a closed profile having an upper side 21 and a lower side 22 and two side edges 23, 24 which are constructed as a tongue and groove connection. For reasons of strength, the profile is divided by partitions 26. Further, channels 27 of a circular cross-section are provided in the profile. These likewise contribute to the strength, and they may also be used as heating pipes. This may be either directly where the channels are interconnected through an end member, or indirectly by running a separate heating coil in the channels. Since the upper side of the pipe wall is integrated with the upper side of the profile, a good conduction of heat is obtained in the upper side, while the rib connection with the lower side results in insulation with respect thereto.

At the partitions 26, the upper side of the profile is provided with longitudinal "centre grooves" for screws or bore holes. For unique positioning of these, the profile interiorly has a longitudinal flap 29 in parallel with the partitions, which causes deformation of the profile when the screws are tightened. It will be appreciated that the other cavities in the profile are suitable for the running of electric or light guide cables.

Fig. 9 of the drawing shows a fitting piece 30 having a width corresponding to one third of the width of the floor profile. It will be appreciated that additional fitting pieces may be made of course, as needed.

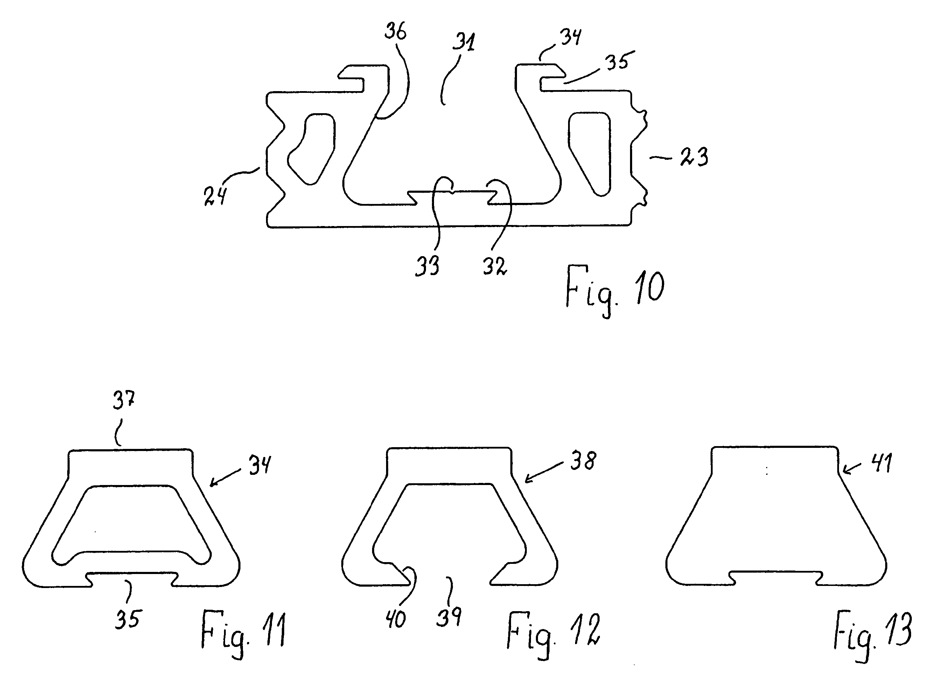

At the places where the rows of chairs are to be, profiles are arranged below the legs, having a cross-section as shown in fig. 10 with side edges similar to those of the main profile. The profile has a longitudinal dovetail key 31 for the insertion of inserts, as shown in figs. 11-13. The bottom of the key 31 has a dovetail 32 with a "centre" groove 33 for attachment of the profile with screws or bolts. The upper side, at each side of the dovetail key, is formed with a flap 34 having a key 35 down towards the upper side of the profile for securing the edge on the flooring.

As mentioned, figs. 11-13 of the drawing show cross-sections of inserts for insertion into the keys. The insert 34 is shown in fig. 11 as a closed profile whose lower side has a key 35 for receiving the dovetail 32 when the insert is inserted into the profile shown in fig. 10. In addition to engaging the inclined walls 36 in the profile, the bottom of the insert is secured with the dovetail 32. Holes are milled or pre-drilled in the upper side 37 of the insert for the attachment of the chairs or other aids.

The insert 38 shown in fig. 12 differs from the foregoing exclusively in that it is an open profile, more particularly in that it is open 39 at the bottom and has inclined edges 40 which fit below the edges on the dovetail 32 at the bottom of the profile in fig. 10. The insert 38 is typically used where the mounting profile shown in fig. 10 is secured with screws or bolts in the bottom.

The insert 41 shown in fig. 13 differs from the insert shown in fig. 11 exclusively in that it is a solid profile, which is used where extreme loads may occur.

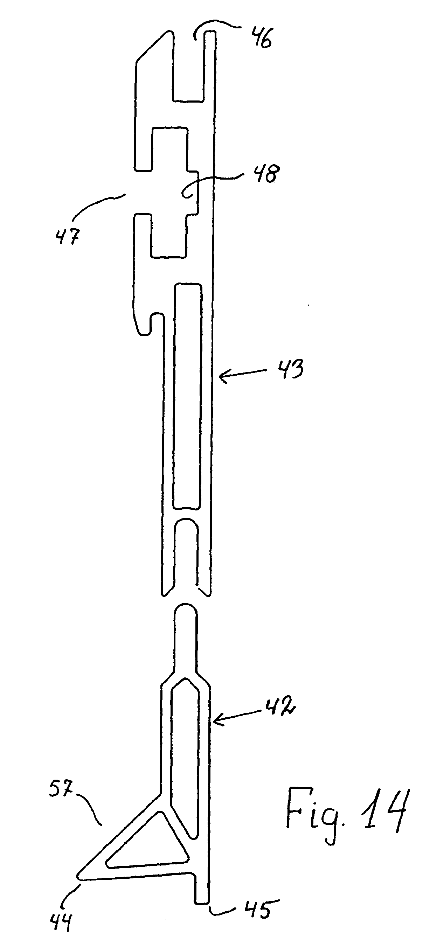

A panel profile as shown in fig. 14 may be used as a termination toward the sides of the vehicle. The profile is formed by lower and upper parts 42, 43, the lower part having a triangular moulding 43 whose outer end 44 is intended to rest on the upper side of the floor profiles. The profile is kept in position with a downwardly directed flap 45 which is wedged down between the inner side of the vehicle and the floor profile adjoining it. The second part 43 of the panel profile is connected with the first part 42 by a tongue and groove connection. The upper edge of the second profile part 43 is formed with a key 46 for receiving the lower edge of the side covering in the vehicle. In addition, there is a longitudinal key 47 in which various fittings may be arranged, e.g. fittings for the attachment of chairs, other aids or equipment. The bottom of the key 47 has a countersink 48 for securing the profile with screws or bolts so that their heads do not extend blockingly into the hollow of the key.

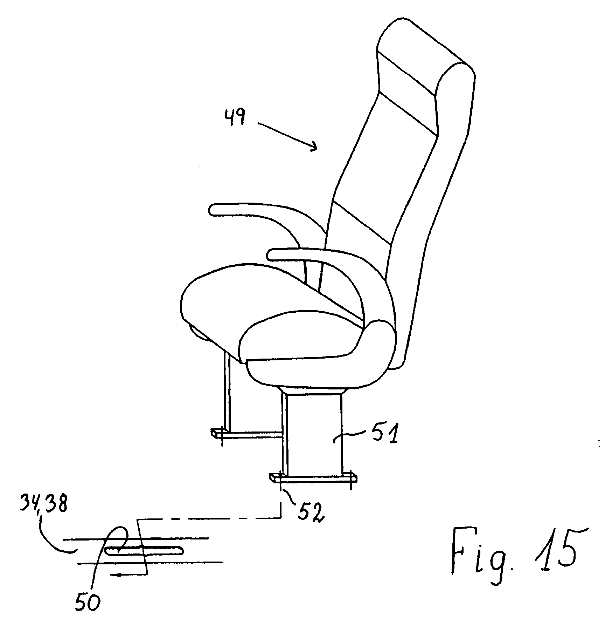

Fig. 15 of the drawing shows by way of principle how a chair 49 is secured to the floor. As mentioned, the upper side of the insert 34 or 38 is formed with mounting holes 50 like the previously mentioned holes shown in fig. 6 of the drawing. The chair is placed with the legs 52 on a pair of profiles 34, 38 intended for the purpose, so that the screws may be inserted into the expanded part 10 of the holes. The chair is then pushed backwards and forwards to seat the shank of the bolt 52 in the slot 9. When the bolts have been tightened, the chair is fixedly mounted. By performing the reverse operation, the chairs may readily be dismounted and removed. The mounting of the chairs by means of the solid insert 41 may take place in two ways, depending on whether the insert is provided with milled or pre-drilled holes or not. In the first-mentioned case, the mounting takes place like with the inserts 34, 38, while in the last-mentioned case holes are milled or drilled where the chairs or the aids are to be arranged.

It has previously been stated that the profiles may be screwed or bolted to the bottom of the vehicle, just as they may be riveted. Where closed profiles are involved, as shown in figs. 8-10, it is also possible to glue or bond the floor to the bottom of the vehicle.

## Claims

1. A method of mounting chairs in a means of transport, comprising
a.
1) forming a floor plate of a plurality of parallel floor profiles (11) by interconnecting the floor profiles (11) via side flanges by welding, gluing, tongue and groove connection or the like, which floor profiles (11) are formed as reversed U-profiles with plane or substantially plane upper sides, which floor plate comprises a plurality of recesses distributed in a suitable pattern for receiving securing means for securing chairs and for receiving attachment means for attaching the floor plate to said bottom,
or
2) forming a floor plate of a plurality of parallel floor profiles by interconnecting the floor profiles via side flanges by welding, gluing, tongue and groove connection or the like, which floor plate comprises a plurality of recesses distributed in a suitable pattern for receiving securing means for securing chairs, which floor profiles are formed as closed profiles with plane or substantially plane upper and lower sides (21) and as profiles having a longitudinal key (31) for receiving securing means for securing chairs and for receiving attachment means for attaching the floor plate to said bottom,
b.
attaching the floor plate to a bottom (12) of said means of transport, and
c.
placing and securing chairs in structural attachment with said floor plate, using said recesses, independently of said bottom.

2. A method according to claim 1, **characterized by** attaching the floor plate to the bottom of said means of transport (12) by gluing, said floor plate being formed of closed profiles.

3. A method according to claim 1 or 2, **characterized by** using profiles having different widths.

4. A means of transport comprising a bottom (12) with an upper side, where a floor plate is attached to said bottom (12), said floor plate being placed on said upper side of said bottom (12), which floor plate comprises a plurality of recesses distributed in a suitable pattern for receiving securing means for securing chairs and for receiving attachment means for attaching the floor plate to said bottom, and where chairs are placed and secured in structural attachment with said floor plate (1) using said recesses independently of said bottom (12), wherein
1) the floor plate is formed by a plurality of parallel floor profiles (11) being interconnected via side flanges (16) by welding, gluing, tongue and groove connection or the like, and which floor profiles (11) are constructed as reversed U-profiles with plane or substantially plane upper sides,
or
2) in that the floor plate is formed by a plurality of parallel floor profiles being interconnected via side flanges (16) by welding, gluing, tongue and groove connection or the like, and which floor profiles are constructed as closed profiles with plane or substantially plane upper and lower sides and as profiles having a longitudinal key (31) for receiving securing means for receiving chairs.

5. A means of transport according to claim 4, **characterized in that** the floor plate formed of closed profiles is attached to the bottom (12) by gluing.

6. A means of transport according to one of claims 4-5, **characterized in that** heating pipes (18, 27) for providing floor heating are arranged inside the floor profiles.

7. A means of transport according to one or more of claims 4-6 **characterized in that** the floor plate comprises profiles having different widths.

8. A means of transport according to one or more of claims 4-7, **characterized in that** the floor plate above the recesses (3) is provided with mounting blocks (56) which are formed with a hole of the same shape as the recesses (3) in the floor plate (11), e.g. an elongate hole (9) with a reception opening (10) for the securing means.

9. A means of transport according to one or more of claims 4-8, **characterized in that** a flooring (5) is laid on an adapted cover plate (4), which is moreover formed with holes corresponding to the mounting positions of the selected cabin layout, said cover plate (4) being placed on top of the floor plate.

10. A means of transport according to one or more of claims 4-9, **characterized in that** said longitudinal recess (31) is a dovetail key for an insert (34, 38, 41).

11. A means of transport according to one or more of claims 4-10, **characterized in that** at least one closed floor profile is formed with pipe channels (27) whose upper part is preferably integrated with the upper side of the profile and separated from the lower side.

12. A means of transport according to claim 11, **characterized in that** the pipe channels are heating pipes (19, 27) for providing floor heating and which are arranged inside the floor profiles (11).

13. A means of transport according to claim 11 or 12,
**characterized in that** the floor plate comprises profiles (11) of different widths.

14. A means of transport according to one or more of claims 11-13, **characterized in that** the floor profiles (11) are made of aluminum.

15. A means of transport according to any of the preceding claims 4-14, said recesses shaped as elongated holes (9) with a reception opening (10).

## Patentansprüche

1. Verfahren zum Anbringen von Stühlen in einem Transportmittel, das aufweist
a.
1) eine Bodenplatte aus einer Mehrzahl paralleler Bodenprofile (11) durch Verbinden der Bodenprofile (11) miteinander über Seitenflansche durch Schweißen, Kleben, Zungen-Nut-Verbindung oder dergleichen zu bilden, welche Bodenprofile (11) als umgekehrte U-Profile mit ebenen oder im Wesentlichen ebenen Oberseiten ausgebildet sind, welche Bodenplatte eine Mehrzahl von Ausnehmungen aufweist, die in einem geeigneten Muster zum Aufnehmen von Befestigungsmitteln zum Befestigen von Stühlen und zum Aufnehmen von Anbringungsmitteln zum Anbringen der Bodenplatte an dem Boden verteilt sind,
oder
2) eine Bodenplatte aus einer Mehrzahl paralleler Bodenprofile durch Verbinden der Bodenprofile miteinander über Seitenflansche durch Schweißen, Kleben, Zungen-Nut-Verbindung oder dergleichen zu bilden, welche Bodenplatte eine Mehrzahl von Ausnehmungen aufweist, die in einem geeigneten Muster zum Aufnehmen von Befestigungsmitteln zum Befestigen von Stühlen verteilt sind, welche Bodenprofile als geschlossene Profile mit ebenen oder im Wesentlichen ebenen Ober- und Unterseiten (21) und als Profile ausgebildet sind, die eine Längsnut (31) zum Aufnehmen von Befestigungsmitteln zum Befestigen von Stühlen und zum Aufnehmen von Anbringungsmitteln zum Anbringen der Bodenplatte an dem Boden haben,
b.
die Bodenplatte an einem Boden (12) des Transportmittels anzubringen, und
c.
Stühle in struktureller Anbringung mit der Bodenplatte anzuordnen und zu befestigen, wobei die Ausnehmungen unabhängig von dem Boden benutzt werden.

2. Verfahren nach Anspruch 1, **dadurch gekennzeichnet, dass** die Bodenplatte am Boden des Transportmittels (12) durch Kleben angebracht wird, welche Bodenplatte aus geschlossenen Profilen gebildet ist.

3. Verfahren nach Anspruch 1 oder 2, **dadurch gekennzeichnet, dass** Profile mit unterschiedlichen Breiten verwendet werden.

4. Transportmittel, das einen Boden (12) mit einer Oberseite aufweist, wobei eine Bodenplatte an dem Boden (12) angebracht ist, welche Bodenplatte auf der Oberseite des Bodens (12) angeordnet ist, welche Bodenplatte eine Mehrzahl von Ausnehmungen aufweist, die in einem geeigneten Muster verteilt sind, um Befestigungsmittel zum Befestigen von Stühlen und zum Aufnehmen von Anbringungsmitteln zum Anbringen der Bodenplatte an dem Boden aufzunehmen, und wobei Stühle in struktureller Anbringung mit der Bodenplatte (1) unter Verwendung der Ausnehmungen unabhängig von dem Boden (12) angeordnet und befestigt sind, wobei
1) die Bodenplatte durch eine Mehrzahl von parallelen Bodenprofilen (11) gebildet ist, die über Seitenflansche (16) durch Schweißen, Kleben, Zungen-und-Nutverbindung oder dergleichen miteinander verbunden sind, und welche Bodenprofile (11) als umgekehrte U-Profile mit ebenen oder im Wesentlichen ebenen Oberseiten konstruiert sind,
oder
2) dass die Bodenplatte aus einer Mehrzahl paralleler Bodenprofile gebildet ist, die über Seitenflansche (16) durch Schweißen, Kleben, Zungen-und-Nutverbindung oder dergleichen verbunden sind, und welche Bodenprofile als geschlossene Profile mit ebenen oder im Wesentlichen ebenen Ober- und Unterseiten und als Profile ausgebildet sind, die eine Längsnut (31) zum Aufnehmen von Befestigungsmitteln zum Aufnehmen von Stühlen haben.

5. Transportmittel nach Anspruch 4, **dadurch gekennzeichnet, dass** die Bodenplatte, die aus geschlossenen Profilen gebildet ist, am Boden (12) durch Kleben befestigt ist.

6. Transportmittel nach einem der Ansprüche 4 bis 5, **dadurch gekennzeichnet, dass** Heizrohre (18, 27) zum Schaffen von Fußbodenheizung innerhalb der Bodenprofile angeordnet sind.

7. Transportmittel nach einem oder mehreren der Ansprüche 4 bis 6, **dadurch gekennzeichnet, dass** die Bodenplatte Profile (11) aufweist, die unterschiedliche Breiten haben.

8. Transportmittel nach einem oder mehreren der Ansprüche 4 bis 7, **dadurch gekennzeichnet, dass** die Bodenplatte oberhalb der Ausnehmungen (3) mit Montageblöcken (56) versehen ist, die mit einem Loch derselben Form wie die Ausnehmungen (3) in der Bodenplatte ausgebildet (11) sind, z. B. einem länglichen Loch (9) mit einer Aufnahmeöffnung (10) für die Befestigungsmittel.

9. Transportmittel nach einem oder mehreren der Ansprüche 4 bis 8, **dadurch gekennzeichnet, dass** ein Fußbodenbelag (5) auf eine angepasste Abdeckplatte (4) gelegt ist, die darüber hinaus mit Löchern ausgebildet ist, die den Montagestellen des ausgewählten Kabinenplans entsprechen, welche Abdeckplatte (4) auf der Oberseite der Bodenplatte angeordnet ist.

10. Transportmittel nach einem oder mehreren der Ansprüche 4 bis 9, **dadurch gekennzeichnet, dass** die längliche Ausnehmung (31) eine Schwalbenschwanznut für einen Einsatz (34, 38, 41) ist.

11. Transportmittel nach einem oder mehreren der Ansprüche 4 bis 10, **dadurch gekennzeichnet, dass** wenigstens ein geschlossenes Bodenprofil mit Rohrkanälen (27) ausgebildet ist, deren oberer Teil vorzugsweise mit der Oberseite des Profils integriert ist und von der Unterseite getrennt ist.

12. Transportmittel nach Anspruch 11, **dadurch gekennzeichnet, dass** die Rohrkanäle Heizrohre (19, 27) zum Schaffen von Fußbodenheizung sind und innerhalb der Bodenprofile (11) angeordnet sind.

13. Transportmittel nach Anspruch 11 oder 12, **dadurch gekennzeichnet, dass** die Bodenplatte Profile (11) unterschiedlicher Breiten aufweist.

14. Transportmittel nach einem oder mehreren der Ansprüche 11 bis 13, **dadurch gekennzeichnet, dass** die Bodenprofile (11) aus Aluminium hergestellt sind.

15. Transportmittel nach einem oder mehreren der Ansprüche 4 bis 14, welche Ausnehmungen als längliche Löcher (9) mit einer Aufnahmeöffnung (10) ausgebildet sind.

## Revendications

1. Procédé pour assembler des chaises dans un moyen de transport, comprenant les étapes consistant à :
a.
1) former une plaque de plancher d'une pluralité de profilés de plancher parallèles (11) en interconnectant les profilés de plancher (11) par l'intermédiaire d'épaulements latéraux par soudage, collage, emboîtement par tenon et mortaise ou similaire, lesquels profilés de plancher (11) sont formés en tant que profilés inversés en forme de U avec des faces supérieures planes ou substantiellement planes, laquelle plaque de plancher comporte une pluralité de renfoncements distribués selon une configuration adaptée pour recevoir des moyens de fixation pour fixer des chaises et pour recevoir des moyens d'attachement pour attacher la plaque de plancher audit fond,
ou
2) former une plaque de plancher d'une pluralité de profilés de plancher parallèles en interconnectant les profilés de plancher par l'intermédiaire d'épaulements latéraux par soudage, collage, emboîtement par tenon et mortaise ou similaire, lesquels profilés de plancher comprennent une pluralité de renfoncement distribués selon une configuration adaptée pour recevoir des moyens de fixation pour fixer des chaises, lesquels profilés de plancher sont formés en tant que profilés fermés avec des faces supérieures et inférieures planes ou substantiellement planes (21), et en tant que profilés ayant une clavette longitudinale (31) pour recevoir des moyens de fixation pour fixer des chaises et pour recevoir des moyens d'attachement pour attacher la plaque de plancher audit fond,
b.
attacher la plaque de plancher à un fond (12) dudit moyen de transport, et
c. placer et fixer les chaises dans un attachement structurel avec ladite plaque de plancher, en utilisant lesdits renfoncements, indépendamment dudit fond.

2. Procédé selon la revendication 1, **caractérisé par** l'attachement de la plaque de plancher au fond dudit moyen de transport (12) par collage, ladite plaque de plancher étant formée de profilés fermés.

3. Procédé selon la revendication 1 ou 2, **caractérisé par** l'utilisation de profilés ayant différentes largeurs.

4. Moyen de transport comportant un fond (12) avec une face supérieure, où une plaque de plancher est attachée audit fond (12), ladite plaque de plancher étant placée sur ladite face supérieure dudit fond (12), laquelle plaque de plancher comporte une pluralité de renfoncements distribués selon une configuration adaptée pour recevoir des moyens de fixation pour fixer des chaises et pour recevoir des moyens d'attachement pour attacher la plaque de plancher audit fond, et où les chaises sont placées et fixées en un attachement structurel avec ladite plaque de plancher (1) en utilisant lesdits renfoncements indépendamment dudit fond (12), dans lequel :
1) la plaque de plancher est formée par une pluralité de profilés de plancher parallèles (11) qui sont interconnectés par l'intermédiaire d'épaulements latéraux (16) par soudage, collage, emboîtement par tenon et mortaise ou similaire, et lesquels profilés de plancher (11) sont construits en tant que profilés inversés en forme de U avec des faces supérieures planes ou substantiellement planes,
ou
2) la plaque de plancher est formée par une pluralité de profilés de plancher parallèles qui sont interconnectés par l'intermédiaire d'épaulements latéraux (16) par soudage, collage, emboîtement par tenon et mortaise ou similaire, et lesquels profilés de plancher sont construits en tant que profilés fermés avec des faces supérieures et inférieures planes ou substantiellement planes et en tant que profilés ayant une clavette longitudinale (31) pour recevoir des moyens de fixation pour fixer des chaises.

5. Moyen de transport selon la revendication 4, **caractérisé en ce que** la plaque de plancher formée de profilés fermés est attachée au fond (12) par collage.

6. Moyen de transport selon l'une des revendications 4 ou 5, **caractérisé en ce que** des tuyaux de chauffage (18, 27) pour fournir un chauffage du plancher sont disposés à l'intérieur des profilés de plancher.

7. Moyen de transport selon l'une ou plusieurs des revendications 4 à 6, **caractérisé en ce que** la plaque de plancher comporte des profilés ayant des largeurs différentes.

8. Moyen de transport selon l'une ou plusieurs des revendications 4 à 7, **caractérisé en ce que** la plaque de plancher au-dessus des renfoncements (3) est pourvue de blocs d'assemblage (56) qui sont formés avec un orifice de la même forme que les renfoncements (3) dans la plaque de plancher (11), par exemple un orifice allongé (9) avec une ouverture de réception (10) pour les moyens de fixation.

9. Moyen de transport selon l'une ou plusieurs des revendications 4 à 8, **caractérisé en ce qu'**un revêtement de plancher (5) est disposé sur une plaque de couverture adaptée (4), qui est en outre formée avec des orifices correspondant aux positions d'assemblage de la disposition choisie de la cabine, ladite plaque de couverture (4) étant placée au-dessus de la plaque de plancher.

10. Moyen de transport selon l'une ou plusieurs des revendications 4 à 9, **caractérisé en ce que** ladite clavette longitudinale (31), est une clavette à queue d'aronde, pour l'insertion d'un élément inséré (34, 38, 41).

11. Moyen de transport selon l'une ou plusieurs des revendications 4 à 10, **caractérisé en ce qu'**au moins un profilé de plancher fermé est formé avec des canalisations de tuyauterie (27) dont la partie supérieure est de préférence intégrée avec la face supérieure du profilé et séparée de la face inférieure.

12. Moyen de transport selon la revendication 11, **caractérisé en ce que** les canalisations de tuyauterie sont des tuyaux de chauffage (19, 27) pour fournir un chauffage du plancher et qui sont disposés à l'intérieur des profilés de plancher (11).

13. Moyen de transport selon la revendication 11 ou 12, **caractérisé en ce que** la plaque de plancher comporte des profilés (11) de différentes largeurs.

14. Moyen de transport selon l'une ou plusieurs des revendications 11 à 13, **caractérisé en ce que** les profilés de plancher (11) sont en aluminium.

15. Moyen de transport selon l'une quelconque des revendications précédentes 4 à 14, **caractérisé en ce que** lesdits renfoncements ont une forme d'orifice allongé (9) avec une ouverture de réception (10)
